# EUROPÄISCHE PATENTSCHRIFT

(11) **EP 0 937 969 B1**
(45) Veröffentlichungstag und Bekanntmachung des Hinweises auf die Patenterteilung: **07.07.2004**
(21) Anmeldenummer: 98123993.2
(22) Anmeldetag: 17.12.1998
(51) Int. Cl.: G01G 19/32, G01G 21/28

(54) **Vorrichtung für rieselfähige Schüttgüter**
Apparatus for flowable bulk material
Dispositif pour produits en vrac pouvant s'écouler

(30) Priorität: 18.02.1998 DE 19806729; 18.02.1998 DE 29802785 U
(43) Veröffentlichungstag der Anmeldung: 25.08.1999
(73) Patentinhaber: Mann + Hummel ProTec GmbH, 71636 Ludwigsburg (DE)
(72) Erfinder: Vollmar, Hartmut, 53773 Hennef-Rott (DE)
(74) Vertreter: Voth, Gerhard, Dipl.-Ing.

(56) Entgegenhaltungen:
- EP-A- 0 595 240
- DE-A- 2 264 466
- DE-U- 29 714 642
- DE-U- 29 714 643

## Beschreibung

Die Erfindung betrifft eine Dosiervorrichtung mit mindestens einem Vorratsbehälter mit Auslaßöffnung für rieselfähiges Schüttgut und einem unterhalb des mindestens einen Vorratsbehälters angeordneten und das austretende Schüttgut aufnehmenden Wiegegefäß mit Wiegezelle zum Abwiegen des Schüttgutes, wobei die Auslaßöffnung in dem mindestens einen Vorratsbehälter mittels eines Absperrorgans öffenbar oder schließbar ist.

Derartige Dosiervorrichtungen sind bekannt und werden beispielsweise für die chargenweise Dosierung eines aus einem oder mehreren Schüttgutkomponenten bestehenden Aufgabegutes in eine Verarbeitungsmaschine verwendet, beispielsweise für die Beaufschlagung eines Extruders mit Kunststoffgranulat und gegebenenfalls weiteren Zusätzen. Je nach durchgeführtem Dosierverfahren unterscheidet man hierbei zwischen volumetrischen und gravimetrischen Dosiervorrichtungen.

Den bekannten gravimetrischen Dosiervorrichtungen ist es zu eigen, daß die zu dosierenden Schüttgüter in entsprechenden Vorratsbehältern bereitgestellt werden und chargenweise in ein unterhalb der Vorratsbehälter angeordnetes Wiegegefäß entsprechend des gewünschten Gewichtsanteiles eingefüllt werden. Zu diesem Zweck ist im Bereich der Austrittsöffnung eines jeden Vorratsbehälters üblicherweise ein Absperrorgan in Gestalt eines Absperrschiebers wie z.B. in DE-297 14 642 U angeordnet, der zunächst geöffnet wird, woraufhin das jeweilige im Vorratsbehälter befindliche Schüttgut in das Wiegefäß fällt und nachfolgend der Absperrschieber beim Erreichen des gewünschten Gewichtsanteiles in dem Wiegegefäß von einer entsprechenden Steuerung wieder verschlossen wird.

Im Zuge der stetig steigenden Leistung der Verarbeitungsmaschinen, für die die bekannten Dosiervorrichtungen eingesetzt werden, bei gleichzeitig stetig steigenden Anforderungen an die Produktionsgenauigkeit werden an die Präzision der Dosiervorrichtung und das damit erhaltene Dosierergebnis hohe Anforderungen gestellt. Zur genauen Auswiegung des Schüttgutes im Wiegegefäß kommt hierbei den Absperrorganen zwischen den Vorratsbehältern und dem Wiegegefäß eine zentrale Bedeutung zu. Sie müssen zum einen die Auslaßöffnung der Vorratsbehälter innerhalb möglichst kurzer Zeit freigeben und verschließen und zum anderen in ihrer Verschlußposition eine möglichst vollständige Abdichtung der Auslaßöffnung gewährleisten. Da die Betätigung der Absperrorgane mit hoher Frequenz und Geschwindigkeit über lange Zeiträume während des Betriebs einer nachgeschalteten Verarbeitungsmaschine erfolgt, werden hierbei hohe mechanische Anforderungen hinsichtlich Verschleiß, Festigkeit und dergleichen mehr an die Absperrorgane der Dosiereinrichtung gestellt.

Die im Stand der Technik üblicherweise als Absperrorgane verwendeten Absperrschieber weisen eine innerhalb einer schienenartigen Führung verschiebliche Platte auf, die je nach Verschiebeposition die Auslaßöffnung des Vorratsbehälters freigibt oder verschließt. Diese bekannten Absperrschieber mit längs verschieblicher Platte erweisen sich bei sehr leistungsfähigen Dosiervorrichtungen als unzureichend und fehleranfällig, da sie bei sehr schneller Betätigung leicht innerhalb ihrer schienenartigen Führung verkanten und darüber hinaus eine vollständige Abdichtung der Auslaßöffnung des Vorratsbehälters nicht immer gewährleisten können. Darüber hinaus gestaltet sich der Aufbau einer Dosiervorrichtung mit Vorratsbehältern und Wiegegefäß und dazwischen angeordneten Absperrschiebern in konventioneller Bauweise sehr aufwendig und gegebenenfalls erforderlich werdende Umbauarbeiten an der Dosiervorrichtung infolge von Produktionsänderungen oder dergleichen gestalten sich schwierig.

Die Erfindung hat sich daher die Aufgabe gestellt, eine Dosiervorrichtung der eingangs genannten Art dahingehend zu verbessern, daß sie auch bei sehr hoher Leistung eine präzise und dauerhaft funktionssichere Dosierung der rieselfähigen Schüttgüter für die Verarbeitungsmaschine ermöglicht und darüber hinaus einen besonders einfachen und leicht an veränderte Produktionsbedingungen anpaßbaren Aufbau aufweist.

Diese Aufgabe wird erfindungsgemäß mit einer Dosiervorrichtung gemäß den kennzeichnenden Merkmalen des Patentanspruches 1 gelöst.

Vorteilhafte Ausgestaltungen der Erfindung sind den Unteransprüchen entnehmbar.

Erfindungsgemäß wird die Lösung der gestellten Aufgabe dadurch erreicht, daß das jedem Vorratsbehälter zugeordnete Absperrorgan ein rohrförmiges Gehäuse und eine quer zur Längsachse des Gehäuses durch die Mantelfläche des Gehäuses mit zwei Durchbrüchen verlaufende Durchtrittsöffnung für das Schüttgut aufweist und die Auslaßöffnung des Vorratsbehälters mit der Durchtrittsöffnung kommuniziert und innerhalb des rohrförmigen Gehäuses ein Verschlußteil mit einem dem Querschnitt des rohrförmigen Gehäuses entsprechenden Querschnitt entlang der Längsachse verschieblich geführt ist und das Verschlußteil in Abhängigkeit von der jeweiligen Verschiebeposition innerhalb des rohrförmigen Gehäuses die Durchtrittsöffnung für das Schüttgut freigibt oder verschließt.

Im Rahmen der Erfindung wurde gefunden, daß durch die vorgeschlagene Ausbildung des Absperrorgans mit einem rohrförmigen Gehäuse und einem entsprechend ausgebildeten und darin längsverschieblich geführten Verschlußteil eine erhebliche Verbesserung der Leistung und Dosiergenauigkeit der bekannten Dosiervorrichtungen erzielt werden kann. Aufgrund des in einem rohrförmigen Gehäuse längsverschieblich geführten Verschlußteils wird eine wesentlich genauere Führung des Verschlußteils innerhalb des Gehäuses des Absperrorgans erreicht, wodurch ein Verkanten des Verschlußteiles beispielsweise bei sehr hoher Bestätigungsgeschwindigkeit und entsprechender Beschleunigung verhindert wird. Gleichzeitig wird durch die genaue Führung des Verschlußteiles innerhalb des rohrförmigen Gehäuses dessen mechanischer Verschleiß deutlich verringert, was zu längeren Standzeiten der erfindungsgemäßen Dosiervorrichtung führt.

Insbesondere ist es gemäß einer vorteilhaften Ausführungsform der Erfindung möglich, daß Verschlußteil kolbenförmig auszubilden und innerhalb des rohrförmigen Gehäuses des Absperrorgans abdichtend und spielfrei längsverschieblich zu führen. Hierbei wird das Verschlußteil innerhalb des rohrförmigen Gehäuses vollflächig entlang seines Umfanges längsverschieblich geführt, so daß eine vollständige Abdichtung der Durchtrittsöffnung und damit der Auslaßöffnung des Vorratsbehälters der erfindungsgemäßen Dosiervorrichtung bewirkbar ist, auch wenn sehr feinteilige Schüttgüter zu dosieren sind. Die Dosiergenauigkeit der erfindungsgemäßen Dosiervorrichtung wird hierdurch wesentlich gesteigert.

Eine bevorzugte Ausführungsform der Erfindung sieht vor, daß die Absperrorgane in einer Ebene angeordnet sind und zu einer Absperreinheit zusammengefaßt sind, die zwischen den Vorratsbehältern und der Wiegezelle angeordnet ist. Durch die Zusammenfassung der den Vorratsbehältern zugeordneten Absperrorgane in einer Absperreinheit auf einer Ebene zwischen den Vorratsbehältern und dem Wiegegefäß wird ein außerordentlich kompakter und einfacher Aufbau der erfindungsgemäßen Dosiervorrichtung ermöglicht. Insbesondere ist es möglich, mit einigen wenigen Handgriffen die erfindungsgemäße Dosiervorrichtung durch Hinzufügen oder Entfernen von Vorratsbehältern an geänderte Produktionsbedingungen mit mehr oder weniger Schüttgutkomponenten anzupassen, was nachfolgend noch näher erläutert wird.

Als Absperreinheit wird gemäß einer vorteilhaften Weiterbildung der Erfindung ein die Fallrichtung der Schüttgutkomponenten aus den Vorratsbehältern querendes Tragteil mit Durchtrittsöffnungen für den vertikalen Fall der Schüttgutkomponenten aus den Vorratsbehältern in das Wiegegefäß vorgeschlagen, dessen Durchtrittsöffnungen mit quer zu diesen verlaufenden zylindrischen Hohlräumen, die die rohrförmigen Gehäuse der Absperrorgane bilden, kommunizieren und in denen die verschiebbaren kolbenförmigen Verschlußteile angeordnet sind.

Eine weitere vorteilhafte Ausführungsform der Erfindung sieht vor, daß die Absperreinheit ein rahmenartiges, insbesondere ringförmiges Tragteil aufweist und die Absperrorgane innerhalb des Tragteiles sternförmig mit ihrer Längsachse entlang der Durchmesser des Tragteiles verlaufend angeordnet sind.

In Weiterbildung der Erfindung wird darüber hinaus vorgeschlagen, daß das Tragteil zusammen mit den rohrförmigen Gehäusen der Absperrorgane einstückig ausgebildet ist, beispielsweise als Gußteil einstückig hergestellt ist und das Tragteil im Bereich seines Außenumfanges jeweils eine durch die Mantelfläche des Tragteiles in die rohrförmigen Gehäuse einmündende Einführöffnung für ein Verschlußteil aufweist. Hierdurch wird ein modularer Aufbau der erfindungsgemäßen Dosiervorrichtung ermöglicht, der es gestattet, diese innerhalb kurzer Zeit an unterschiedliche Produktionsaufgaben mit wechselnder Anzahl von zu dosierenden Komponenten und deren Gewichtsanteilen auf einfache Weise anzupassen.

Hierzu wird vorgeschlagen, daß die Verschlußteile mit zugehörigem Antrieb bedarfsweise in die im Tragteil angeordneten Gehäuse zur Ausbildung von Absperrorganen einführbar sind, so daß durch Einführen bzw. Entfernen der Verschlußteile mit zugehörigem Antrieb in bzw. aus den im Tragteil angeordneten rohrförmigen Gehäusen das Tragteil mit Absperrorganen entsprechend der benötigten Anzahl an Vorratsbehältern innerhalb kurzer Zeit ausrüstbar ist. Im Falle der Nichtbenutzung eines oder mehrerer in dem Tragteil ausgebildeten rohrförmigen Gehäuse der Absperrorgane können diese außenseitig mittels aufgebrachter Blindstopfen oder dergleichen verschlossen werden.

Eine weitere vorteilhafte Ausführungsform der Erfindung sieht vor, daß innerhalb des Tragteiles der Absperreinheit im Bereich zwischen zwei benachbarten Absperrorganen jeweils ein Freiraum ausgebildet ist und das Tragteil eine durch die Mantelfläche des Tragteiles in den Freiraum einmündende Einführöffnung aufweist, in die ein Schneckendosierer einführbar und mit dem Tragteil verbindbar ist. Auf diese Weise wird es ermöglicht, die erfindungsgemäße Dosiervorrichtung nicht nur mit Vorratsbehältern und den zugehörigen Absperrorganen für die Dosierung von Schüttgutkomponenten auszurüsten, sondern es können darüber hinaus auch an sich bekannte Schneckendosierer zusätzlich zu den Vorratsbehältern mit Absperrorganen verwendet werden, beispielsweise um Schüttgutkomponenten mit einem sehr geringen Gewichtsanteil in das Wiegegefäß einzudosieren. Hierbei werden die Schneckendosierer zumindest mit ihrem vorderen Schneckenende durch die Einführöffnung im Tragteil in dieses eingeschoben, so daß das vordere Schneckenende, aus welchem die zu dosierende Schüttgutkomponente austritt, in den Freiraum des Tragteiles einmündet und die eindosierte Schüttgutkomponente in das unterhalb des Tragteiles ausgebildete Wiegegefäß fallen kann.

Auch hierbei ist wieder der bereits vorangehend erläuterte modulare Aufbau der erfindungsgemäßen Dosiervorrichtung ermöglicht, da bedarfsweise Schneckendosierer am Tragteil an den dort ausgebildeten und in die Freiräume zwischen zwei benachbarten Absperrorganen einmündenden Durchtrittsöffnungen befestigt oder von diesen abgenommen werden können.

Nicht benötigte Durchgangsöffnungen für Schneckendosierer können ebenfalls mittels Blindstopfen oder ähnlichem verschlossen werden.

Auf diese Weise ist es gemäß einer vorteilhaften Ausführungsform der Erfindung möglich, bis zu sechs Absperrorgane für zugehörige Vorratsbehälter und bis zu sechs Schneckendosierer an der erfindungsgemäßen Dosiervorrichtung vorzusehen. Hierdurch können beispielsweise Blends von Kunststoffgranulaten, die einer Extrusions- oder Spritzgußanlage zugeführt werden sollen, mit der erfindungsgemäßen Dosiervorrichtung für nahezu jede Produktionsanforderung hergestellt werden.

Eine weitere Steigerung der Dosiergenauigkeit der erfindungsgemäßen Dosiervorrichtung kann darüber hinaus dadurch geschaffen werden, daß im Bereich des Auslasses der Dosiervorrichtung zur Verarbeitungsmaschine ein mit einer drehbaren Schnecke ausgerüsteter Mischer zur Durchmischung des aus dem Wiegegefäß ausgelassenen Schüttgutes vorgesehen ist und der Mischer unter einem Winkel von 10 bis 60 °, bezogen auf die Horizontale geneigt angeordnet ist. Durch diese geneigte Anordnung des Mischers wird bei dessen Betrieb eine stets vollständige Entleerung des innerhalb des Mischers durchmischten Schüttgutes in die nachfolgend der Dosiereinrichtung vorgesehene Verarbeitungsmaschine ermöglicht.

Die Erfindung wird nachfolgend anhand eines Ausführungsbeispieles in der Zeichnung näher erläutert. Es zeigen:
- Figur 1: die Seitenansicht einer erfindungsgemäßen Dosiervorrichtung,
- Figur 2: einen Schnitt durch das Absperrorgan der erfindungsgemäßen Dosiervorrichtung entlang der Ebene E in Figur 1,
- Figur 3: in schematisierter Darstellung einen Schnitt durch ein Absperrorgan der erfindungsgemäßen Dosiervorrichtung,
- Figur 4: den Schnitt gemäß Pfeilen A - A durch das Absperrorgan in Figur 3,
- Figur 5: die Aufsicht auf das Absperrorgan gemäß Figur 3,
- Figur 6: einen Schnitt durch das Tragteil der Absperreinheit entlang der Linie E in Figur 1,
- Figur 7: eine weitere Ausführungsform eines Tragteils.

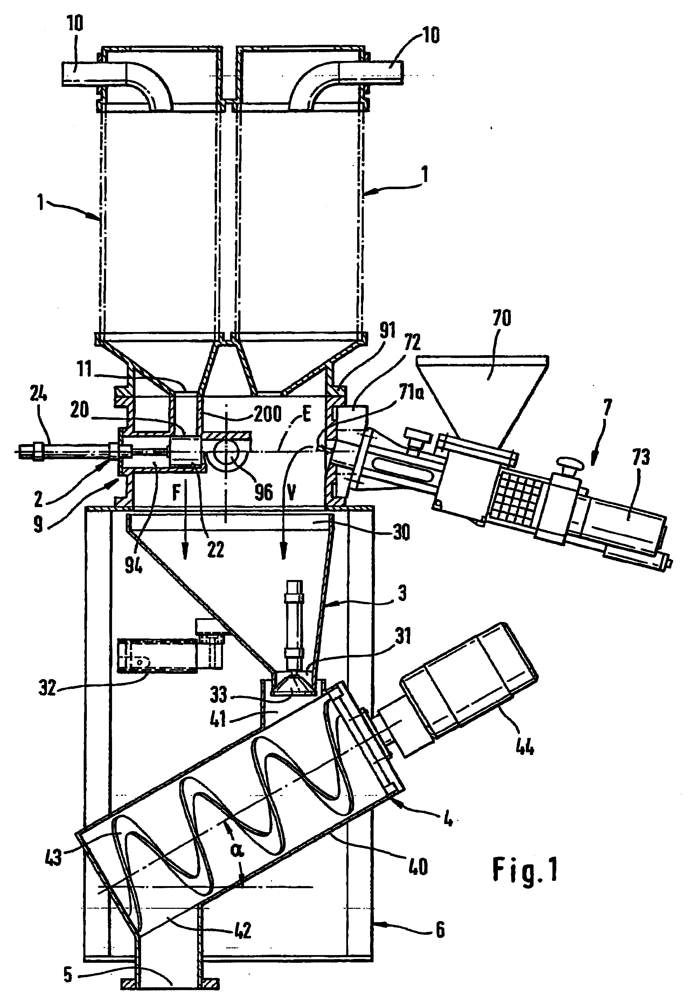

In der Figur 1 ist eine Dosiervorrichtung zur gravimetrischen Dosierung eines rieselfähigen Schüttgutes aus mehreren Schüttgutkomponenten in eine hier nicht dargestellte Verarbeitungsmaschine, wie ein Extruder oder eine Spritzgießmaschine zur Herstellung von Kunststofferzeugnissen dargestellt.

Die Dosiervorrichtung weist für Schüttgutkomponenten mit größerem Gewichtsanteil am zu dosierenden Schüttgut mehrere trichterförmige Vorratsbehälter 1 mit Zuführstutzen 10 und für Schüttgutkomponenten mit geringerem Gewichtsanteil am zu dosierenden Schüttgut Schneckendosierer 7 mit Aufgabetrichtern 70 auf. Pro Schüttgutkomponente ist jeweils ein Vorratsbehälter 1 bzw. ein Schneckendosierer 7 vorgesehen. Die Aufteilung der Schüttgutkomponenten auf Vorratsbehälter 1 bzw. Schneckendosierer 7 erfolgt nach dem jeweiligen Gewichtsanteil der Schüttgutkomponente an dem zu dosierenden Schüttgut, da die Schneckendosierer 7 eine wesentlich präzisere Dosierung gegenüber den Vorratsbehältern 1 ermöglichen und von daher für die Komponenten mit besonders niedrigem Gewichtsanteil vorgesehen sind.

Über eine nachfolgend noch näher erläuterte Absperreinheit 9 gelangen die einzelnen Schüttgutkomponenten des zu dosierenden Schüttgutes in ein trichterförmiges Wiegegefäß 3, welches innerhalb eines Gestells 6 an einer Wiegezelle 32 in an sich bekannter Weise gehaltert ist und mittels der Wiegezelle 32 eine Auswiegung der einzelnen Schüttgutkomponenten des zu dosierenden Schüttgutes vornimmt.

Die Auslaßöffnung 31 des Wiegegefäßes 3, welche mittels eines Verschlußelementes 33 bedarfsweise öffenbar oder verschließbar ist, mündet in einen Mischer 4 ein, der mittels einer über einen Antrieb 44 drehbaren Schnecke 43 eine Durchmischung des abgewogenen und dosierten Schüttgutes bewirkt, bevor dieses die Dosiervorrichtung in Richtung der nicht dargestellten Verarbeitungsmaschine über die Austrittsöffnung 5 verläßt.

Zur Dosierung der einzelnen Schüttgutkomponenten wird beim gravimetrischen Dosierverfahren eine chargenweise Abwiegung der einzelnen Schüttgutkomponenten im Wiegegefäß 3 mittels der Wiegezelle 32 vorgenommen. Wenn alle Schüttgutkomponenten entsprechend ihres jeweiligen Gewichtsanteiles zu einer Charge ins Wiegegefäß 3 eindosiert sind, gibt das Verschlußelement 33 die Auslaßöffnung 31 des Wiegegefäßes 3 frei und der Inhalt des Wiegegefäßes 3 wird in den Mischer 4 entleert. Nach darauf erfolgendem Schließen des Verschlußelementes 33 kann eine erneute Dosierung einer Charge in das Wiegegefäß 3 erfolgen, während die zuvor dosierte Charge nach Durchmischung im Mischer 4 der Verarbeitungsmaschine über die Austrittsöffnung 5 zugeführt wird.

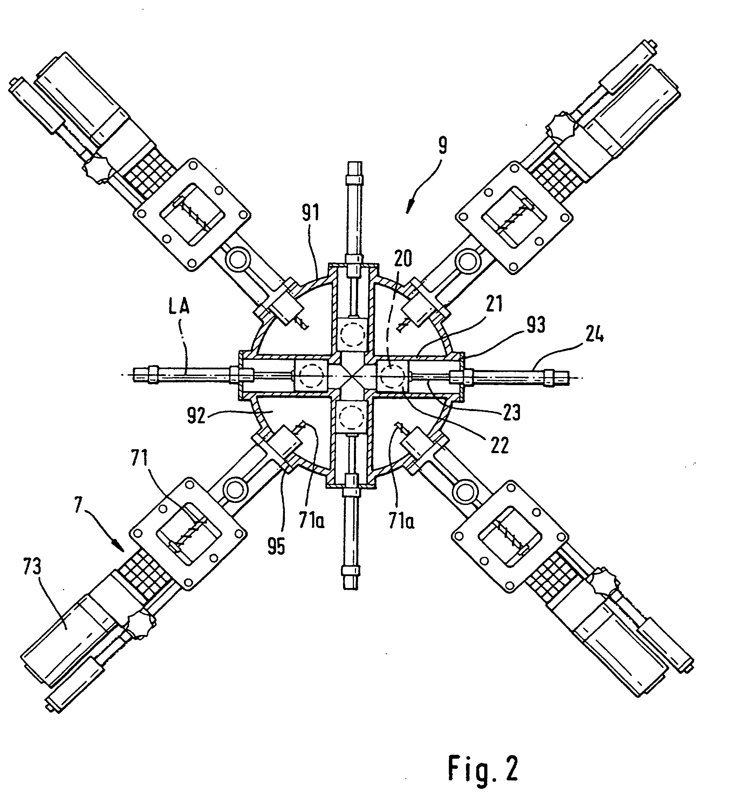

Zur Dosierung der in den trichterförmigen Vorratsbehältern 1 befindlichen Schüttgutkomponenten sind deren im Bodenbereich angeordnete Auslaßöffnungen 11 zum Wiegegefäß 3 hin mittels Absperrorganen 2 öffen- bzw. verschließbar, so daß die einzelnen Schüttgutkomponenten durch aufeinanderfolgendes Öffnen und Schließen der den jeweiligen Vorratsbehältern 1 zugeordneten Absperrorganen 2 gemäß Pfeil F durch das Absperrorgan 2 hindurch in das Wiegegefäß 3 gelangen und bis zum Erreichen der gewünschten Gewichtsanteile der Schüttgutkomponente in das Wiegegefäß 3 dosierbar sind. Die Absperrorgane 2 sind hierbei auf einer Ebene E innerhalb der Absperreinheit 9 angeordnet, deren näherer Aufbau aus der Figur 2 ersichtlich ist und die die Fallrichtung F der Schüttgutkomponenten aus den Vorratsbehältern 1 in das Wiegegefäß 3 quert.

Wie dieser Figur 2 zu entnehmen ist, weist die Absperreinheit 9 ein rahmenartiges ringförmiges Tragteil 91 auf. Die Absperrorgane 2 sind innerhalb des Tragteiles 91 sternförmig mit ihrer Längsachse LA entlang der Durchmesser D des Tragteiles 91 angeordnet. Im vorliegenden Ausführungsbeispiel sind vier Absperrschieber 2 entlang der Durchmesser der Absperreinheit 9 und in sternförmiger Ausrichtung um jeweils 90 ° versetzt zueinander angeordnet, so daß dementsprechend vier Vorratsbehälter 1 für Schüttgutkomponenten mittels dieser Absperreinheit 9 geöffnet oder verschlossen werden können.

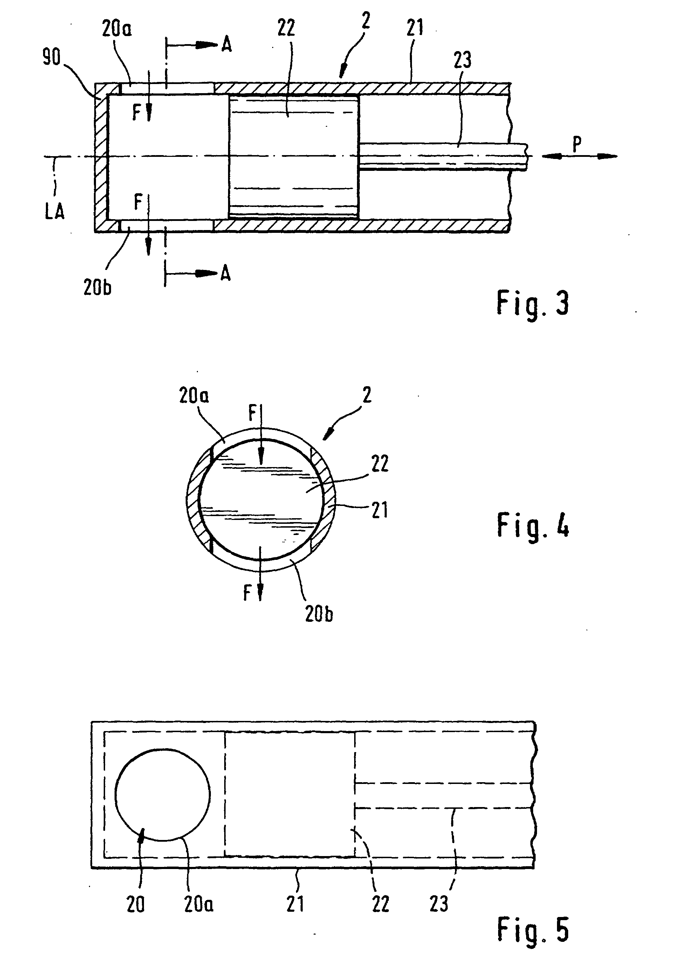

Jedes Absperrorgan 2 weist den in der Figuren 3 bis 5 näher ersichtlichen Aufbau auf. Das Absperrorgan 2 umfaßt ein rohrförmiges Gehäuse 21 mit kreisförmigem Querschnitt, in welchem ein Verschlußteil 22 mittels einer Treibstange 23 und eines außerhalb des Absperrorgans gehalterten Pneumatikzylinders 24 in der Längsachse LA verschieblich in Pfeilrichtung P geführt ist.

Das rohrförmige Gehäuse 21 weist ferner eine quer zur dessen Längsachse LA verlaufende Durchtrittsöffnung 20 auf, die von zwei miteinander fluchtenden Durchbrüchen 20a, b durch die Mantelfläche des Gehäuses 21 gebildet wird. Die Durchtrittsöffnung 20 dient dem Durchtritt der jeweiligen Schüttgutkomponente aus dem Vorratsbehälter 1 in das Wiegegefäß 3 gemäß Pfeilen F. Demzufolge wird der vom Absperrschieber 2 zu verschließende Vorratsbehälter 1 derart auf der Absperreinheit 9 befestigt, daß dessen Auslaßöffnung 11 mit der Durchtrittsöffnung 20 im Absperrorgan 2 fluchtet. Hierzu kann die Durchtrittsöffnung 20 mit der Auslaßöffnung 11 des Vorratsbehälters 1 mittels eines Rohrstutzens 200 verbunden sein, siehe hierzu Figur 1.

Das Verschlußteil 22 ist vorzugsweise kolbenförmig ausgebildet und weist einen dem Querschnitt des rohrförmigen Gehäuses 21 entsprechenden Querschnitt auf, so daß es abdichtend und spielfrei in diesem geführt ist. Bedingt durch die kreisförmigen und einander entsprechenden Querschnitte von rohrförmigem Gehäuse 21 und Verschlußteil 22 erfolgt eine spielfreie Führung des Verschlußteiles 22 entlang seines gesamten Umfanges innerhalb des rohrförmigen Gehäuses 21 und damit vollflächig. Das hintere Ende des Gehäuses weist bevorzugt einen stufenförmigen Anschlag 90 für das Verschlußteil 22 auf.

Zum Freigeben der Auslaßöffnung 11 des Vorratsbehälters 1 und damit zum Befüllen des Wiegegefäßes 3 mit der jeweiligen im Vorratsbehälter 1 befindlichen Schüttgutkomponente wird mittels des Pneumatikzylinders 24 das Verschlußteil 22 in der Darstellung gemäß Figur 3 in Pfeilrichtung P nach rechts in die dargestellte Position verschoben, in der die Durchtrittsöffnung 20 vollständig freigegeben ist. Zum Verschließen der Durchtrittsöffnung 20 und damit zum Verschließen der Auslaßöffnung 11 des Vorratsbehälters 1 innerhalb der Dosiervorrichtung wird das Verschlußteil 22 in der Darstellung gemäß Figur 3 mittels des Pneumatikzylinders 24 nach links verschoben, bis es an dem Anschlag 90 des rohrförmigen Gehäuses 21 zur Anlage kommt. In dieser, in der Zeichnung nicht dargestellten Position verschließt das Verschlußteil 22 die Durchtrittsöffnung 20 vollständig, wobei die abdichtende Führung des Verschlußteiles 22 innerhalb des Gehäuses 21 auch den Durchtritt sehr feinteiliger Teilchen in Richtung des Wiegegefäßes 3 unterbindet, wodurch eine hohe Dosiergenauigkeit der Dosiervorrichtung erreicht wird.

Neben der bereits erwähnten außerordentlich guten Abdichtung und damit hohen Dosiergenauigkeit der Dosiervorrichtung wird durch die Ausgestaltung des Absperrorgans mit rohrförmigem Gehäuse 21 und entsprechend ausgebildetem zylindrischem Verschlußteil 22 eine besonders genaue Führung des Verschlußteiles 22 im rohrförmigen Gehäuse 21 erreicht, so daß auch bei hoher Betätigungsfrequenz und Beschleunigung des Verschlußteiles 22 ein Verkanten desselben innerhalb des Gehäuses 21 verhindert wird, wodurch die Leistungsfähigkeit der Dosiervorrichtung erhöht und deren Verschleiß verringert wird.

Das Absperrorgan 2 mit rohrförmigem Gehäuse 21 und entsprechend ausgebildetem zylindrischem Verschlußteil 22 ermöglicht daher eine wesentlich genauere und leistungsfähigere Dosierung von Schüttgütern und deren Komponenten bei verlängerter Standzeit, als es bei den bekannten Absperrorganen, wie Absperrschiebern bisher der Fall war.

Ein weiterer wesentlicher Vorteil der Absperrorgane 2 mit rohrförmigem Gehäuse 21 und entsprechend ausgebildeten zylindrischem Verschlußteil 22 ist deren äußerst geringer Platzbedarf, so daß die bereits erwähnte Anordnung der Absperrschieber in einem ringförmigen Tragteil 91 auf einer Ebene E zu einer Absperreinheit 9, wie sie in Figur 2 dargestellt ist, auf äußerst kompakte Weise realisiert werden kann.

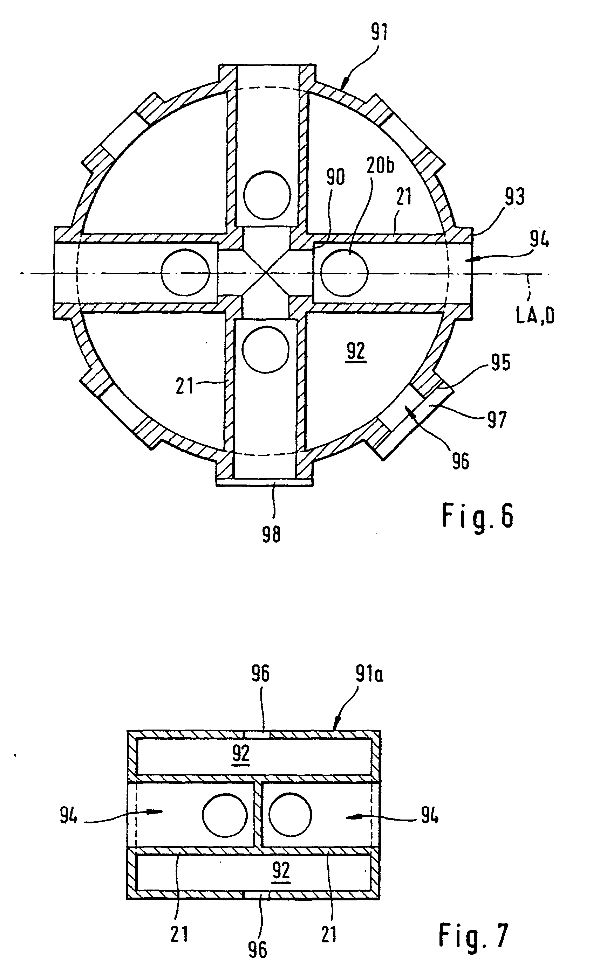

Der Aufbau des ringförmigen Tragteiles 91 der Absperreinheit 9 ist in der Figur 6 näher dargestellt. Wie dieser Figur 6 zu entnehmen ist, ist das Tragteil 91 einstückig mit vier in sternförmiger Anordnung entlang der Durchmesser des Tragteiles 91 verlaufenden rohrförmigen Gehäusen 21 für Absperrorgane 2 ausgebildet, beispielsweise als Gußteil hergestellt. In jedem rohrförmigen Gehäuse 21 sind die Durchbrüche 20a, 20b zur Ausbildung der Durchtrittsöffnung 20 für das Schüttgut ausgebildet. Jedes rohrförmige Gehäuse 21 ist durch die Mantelfläche des ringförmigen Tragteiles 91 geführt und weist eine Einführöffnung 94 auf, durch die bedarfsweise ein Verschlußteil 22 mit Treibstange 23 und daran befestigtem Pneumatikzylinder 24 in das rohrförmige Gehäuse 21 zur Ausbildung eines Absperrorganes 2 gemäß der Darstellung in Figur 2 von außen nach innen eingeführt werden kann. Hierzu ist in dem die Einführöffnung 94 umgebenden Bereich des Tragteiles 91 eine Flanschfläche 93 ausgebildet, die mit entsprechenden in der Figur 6 nicht dargestellten Befestigungsmitteln für die Befestigung des Pneumatikzylinders 24 ausgerüstet ist. Am anderen, der Einführöffnung 94 gegenüberliegenden inneren Ende des rohrförmigen Gehäuses 21 ist ein stufenförmiger Absatz 90 ausgebildet, der als Anschlag für das in Verschlußposition bewegte Verschlußteil 22 dient, wenn dieses die Durchtrittsöffnung 20 im rohrförmigen Gehäuse 21 verschließt.

Bei Verwendung eines derartigen Tragteiles 91 ist es möglich, die Absperreinheit 9 entsprechend den Produktionsanforderungen modular aufzubauen. Hierzu wird der Tragteil 91 bedarfsweise mit Absperrorganen 2 durch Einführen der Verschlußteile nebst ihrem Antrieb, d. h. Treibstange 23 und Pneumatikzylinder 24 in das integral im Tragteil 91 ausgebildete rohrförmige Gehäuse 21 ausgerüstet. Es ist von daher möglich, die Absperreinheit 9 der Dosiervorrichtung innerhalb kurzer Zeit an geänderte Produktionsbedingungen, die mehr oder weniger Schüttgutkomponenten mit entsprechender Anzahl Vorratsbehälter 1 und zugeordneten Absperrorganen 2 benötigen, anzupassen. Im Falle der Nichtbenutzung eines innerhalb des Tragteiles 91 ausgebildeten rohrförmigen Gehäuses 21 für ein Absperrorgan 2 kann die Einführöffnung 94 des rohrförmigen Gehäuses 21 mittels eines Blindstopfens 98 vorübergehend verschlossen werden.

Da die mit rohrförmigem Gehäuse 21 ausgebildeten Absperrorgane 2 innerhalb des Tragteiles 91 sternförmig um jeweils 90 ° versetzt zueinander angeordnet sind und nur einen geringen Platzbedarf aufweisen, verbleibt zwischen zwei benachbarten rohrförmigen Gehäusen 21 ein Freiraum 92, der für das Eindosieren von weiteren Schüttgutkomponenten in das Wiegegefäß 3 mittels der bereits erwähnten Schneckendosierer 7 genutzt werden kann. Zu diesem Zweck ist jeder in etwa viertelkreisförmig ausgebildete Freiraum 92 über eine Einführöffnung 96 in der Mantelfläche des Tragteiles 91 von dessen Außenseite her zugänglich, so daß ein Schneckendosierer 7 mit seinem vorderen Endbereich, aus dem die zu dosierende Schüttgutkomponente austritt, in den Freiraum 92 des Tragteiles 91 einmündend angeordnet werden kann. Hierzu ist in dem die Einführöffnung 96 umgebenden Bereich des Tragteiles 91 ebenfalls eine Flanschfläche 95 mit Befestigungselementen vorgesehen, an denen ein Schneckendosierer 7 befestigt werden kann, vergleiche hierzu auch die Figuren 1 und 2.

Wie diesen Figuren 1 und 2 entnehmbar, wird der Schneckendosierer 7 mittels eines Befestigungswinkels 72 am Tragteil 91 der Absperreinheit 9 in Förderrichtung aufwärts geneigt befestigt, wobei die mittels des Antriebes 73 drehbar im Inneren des Schneckendosierers 7 ausgebildete Dosierschnecke 71 mit ihrem vorderen Endbereich 71a in den Freiraum 92 innerhalb des Tragteiles 91 hineinragt. Die vom Schneckendosierer 7 zu dosierende Schüttgutkomponente gelangt bei Drehung der Schnecke 71 über den Aufgabetrichter 70 zum vorderen Ende 71a der Schnecke 71 und fällt nachfolgend gemäß Pfeil V in Figur 1 durch den Freiraum 92 im Tragteil 91 hindurch in das unterhalb der Absperreinheit 9 angeordnete Wiegegefäß 3, wo es mittels der Wiegezelle 32 verwogen wird.

Auch hierbei ist wiederum ein modularer Aufbau der Dosiervorrichtung ermöglicht, da bedarfsweise Schneckendosierer 7 an den zu den Freiräumen 92 führenden Einführöffnungen 96 des Tragteiles 91 befestigt bzw. bei Nichtgebrauch von diesen abgenommen werden können. In einem solchen Fall kann die nicht verwendete Einführöffnung 96 im Tragteil 91 von einem geeigneten Blindstopfen 97 vorübergehend verschlossen werden.

Durch diese Anordnung von Absperrorganen 2 entlang der Durchmesser des Tragteiles 91 der Absperreinheit 9 und Anordnung von Schneckendosierern 7 zwischen zwei benachbarten Absperrorganen 2 wird eine besonders kompakte Dosiervorrichtung geschaffen, bei der sämtliche Absperrorgane 2 für die Vorratsbehälter 1 und sämtliche Schneckendosierer 7 auf einer Ebene E innerhalb der Dosiereinrichtung angeordnet sind.

Insbesondere wird durch diese Ausbildung auch die Anpassung der Dosiereinrichtung an geänderte Produktionsbedingungen mit mehr oder weniger erforderlichen Schüttgutkomponenten wesentlich erleichtert. Die in den Figuren 2 und 6 dargestellte Ausbildung der Absperreinheit 9 mit einem Tragteil 91 ermöglicht es, einen modularen Aufbau der Absperreinheit 9 und damit der Bestückung der Dosiereinrichtung mit Vorratsbehältern 1 und/oder Schneckendosierern 7 vorzunehmen.

Im dargestellten Ausführungsbeispiel ist es demnach möglich, die Dosiervorrichtung mit bis zu vier Vorratsbehältern 1 mit entsprechenden Absperrorganen 2 im Tragteil 91 auszurüsten und zusätzlich bis zu vier Schneckendosierer 7 an dem Tragteil 91 der Absperreinheit 9 zu befestigen, so daß insgesamt bis zu acht Schüttgutkomponenten im Wiegegefäß 3 gravimetrisch verwogen und der Verarbeitungsmaschine zur Verfügung gestellt werden können. Für den Fall, daß weniger Schüttgutkomponenten benötigt werden, wird die entsprechende Anzahl an Schneckendosierern 7 und/oder Vorratsbehältern 1 von der Dosiereinrichtung abgenommen und die zu den abgenommenen Vorratsbehältern 1 gehörigen Absperrorgane 2 aus dem Tragteil 91 entfernt.

Die Ausbildung des Tragteils ist nicht auf das Ausführungsbeispiel gemäß Figuren 1, 2 und 6 mit einem ringförmigen Tragteil 91 für die Ausrüstung mit vier Absperrorganen 2 für vier Vorratsbehälter 1 und vier Schneckendosierern 7 beschränkt, sondern kann auch eine abweichende Gestaltung aufweisen, die es ermöglicht, mehr oder weniger Absperrorgane 2 bzw. Schneckendosierer 7 anzubringen. In der Figur 7 ist ein rahmenartiges Tragteil 91 a mit einem im wesentlichen rechteckigen Querschnitt dargestellt, das zwei auf einer Linie liegende rohrförmige Gehäuse 21 mit Einführöffnungen 94 zur Ausbildung von Absperrorganen 2 aufweist. Benachbart hierzu sind insgesamt zwei Freiräume 92 vorgesehen, an denen über Einführöffnungen 96 Schneckendosierer 7 in bereits erläuterter Weise bedarfsweise angebracht werden können.

Insbesondere ist es auch vorgesehen, daß in den Figuren 3 bis 5 dargestellte Absperrorgan 2 zum bedarfsweisen Öffnen oder Verschließen auch nur eines einzigen Vorratsbehälters 1 innerhalb einer Dosiervorrichtung mit nur einer Schüttgutkomponente vorzusehen.

Um die mittels der Absperrorgane 2 mit rohrförmigem Gehäuse 21 und zylindrischem Absperrschieber 22 realisierte außerordentlich genaue und leistungsfähige Dosierung von Schüttgütern mit großer Genauigkeit an die Verarbeitungsmaschine über die Austrittsöffnung 5 weitergeben zu können, ist darüber hinaus der bereits erwähnte Mischer 4 am Auslaß der Dosiervorrichtung um einen Winkel α von 30 ° gegenüber der Horizontalen geneigt angeordnet, wobei im vorliegenden Beispiel die Neigung von der Einlaßöffnung 41 des Mischers 4 zur Auslaßöffnung 42 abfallend ausgeführt ist. Im Rahmen der Erfindung wurde gefunden, daß durch diese geneigte Anordnung des Mischers 4 in Bezug zur Horizontalen eine wesentlich bessere Durchmischung des dosierten Schüttgutes erreicht wird und darüber hinaus der Mischer stets vollständig entleert wird, da keine Toträume innerhalb des Mischergehäuses 40 mehr vorhanden sind, in denen Material zurückgehalten werden könnte.

Die vorangehend erläuterte Dosiervorrichtung ermöglicht somit eine besonders genaue und leistungsfähige Dosierung rieselfähiger Schüttgutkomponenten bei besonders geringem Verschleiß. Sie ist selbstverständlich nicht auf die in er Zeichnung dargestellte Ausführungsform beschränkt, sondern kann in Anpassung an die jeweilige Produktionsaufgabe in unterschiedlichen Abmessungen und Ausstattungen ausgeführt werden. Insbesondere ist es möglich, die Dosiervorrichtung für unterschiedliche Anzahlen von zu dosierenden Schüttgutkomponenten auszubilden. Hierbei sind Anzahlen von einer einzigen Komponente bishin zu Ausführungsformen mit sechs entlang der Durchmesser der Absperreinheit 9 bzw. dessen Tragteil 91 angeordneten Absperrorganen 2 für entsprechend sechs Vorratsbehälter 1 und dementsprechend sechs zwischen zwei benachbarten Absperrorganen zu befestigenden Schneckendosierern 7 vorgesehen, was eine Dosierung von bis zu zwölf Schüttgutkomponenten ermöglicht.

## Patentansprüche

1. Dosiervorrichtung mit mindestens einem Vorratsbehälter (1) mit Auslaßöffnung (11) für rieselfähiges Schüttgut und einem unterhalb des mindestens einen Vorratsbehälters (1) angeordneten und das austretende Schüttgut aufnehmenden Wiegegefäß (3) mit Wiegezelle (32) zum Abwiegen des Schüttgutes, wobei die Auslaßböffnung (11) in dem mindestens einen Vorratsbehälten (1) mittels eines Absperrorgans (2) öffender oder schließbar ist , **dadurch gekennzeichnet, daß** das jedem Vorratsbehälter zugeordnete Absperrorgan (2) ein rohrförmiges Gehäuse (21) und eine quer zur Längsachse LA des Gehäuses (21) durch die Mantelfläche des Gehäuses (21) mit zwei Durchbrüchen (20a, 20b) verlaufende Durchtrittsöffnung (20) für das Schüttgut aufweist und die Auslaßöffnung (11) des Vorratsbehälters (1) mit der Durchtrittsöffnung (20) kommuniziert und innerhalb des rohrförmigen Gehäuse (21) ein Verschlußteil (22) mit einem dem Querschnitt des rohrförmigen Gehäuse (21) entsprechenden Querschnitt entlang der Längsachse LA verschieblich geführt ist und das Verschlußteil (22) in Abhängigkeit von der jeweiligen Verschiebeposition innerhalb des rohrförmigen Gehäuses die Durchtrittsöffnung (20) für das Schüttgut freigibt oder verschließt.

2. Dosiervorrichtung nach Anspruch 1, **dadurch gekennzeichnet, daß** das Verschlußteil (22) kolbenförmig ausgebildet und abdichtend innerhalb des rohrförmigen Gehäuses (21) des Absperrorgans (2) geführt ist.

3. Dosiervorrichtung nach einem der Ansprüche 1 oder 2, **dadurch gekennzeichnet, daß** die Absperrorgane (2) in einer Ebene (E) angeordnet sind und zu einer Absperreinheit (9) zusammengefaßt sind, die zwischen den Vorratsbehältern (1) und dem Wiegegefäß (3) angeordnet ist.

4. Dosiervorrichtung nach Anspruch 3, **dadurch gekennzeichnet, daß** als Absperreinheit (9) ein die Fallrichtung (F) der Schüttgutkomponenten aus den Vorratsbehältern (1) querendes Tragteil (91) mit Durchtrittsöffnungen (20) für den vertikalen Fall der Schüttgutkomponenten aus den Vorratsbehältern (1) in das Wiegegefäß (3) vorgesehen ist und die Durchtrittsöffnungen (20) mit quer zu diesen verlaufenden zylindrischen Hohlräumen, die die rohrförmigen Gehäuse (21) der Absperrorgane (2) bilden, kommunizieren und in denen die verschiebbaren kolbenförmigen Verschlußteile (22) angeordnet sind.

5. Dosiervorrichtung nach einem der Ansprüche 1 bis 4, **dadurch gekennzeichnet, daß** die Absperreinheit (9) ein rahmenartiges, insbesondere ringförmiges Tragteil (91) aufweist und die Absperrorgane (2) innerhalb des Tragteiles (91) sternförmig mit ihrer Längsachse (LA) entlang der Durchmesser (D) des Tragteiles (91) verlaufend angeordnet sind.

6. Dosiervorrichtung nach Anspruch 5, **dadurch gekennzeichnet, daß** das Tragteil (91) und die rohrförmigen Gehäuse (21) der Absperrorgane (2) einstückig ausgebildet sind und das Tragteil (91) im Bereich seines Außenumfanges jeweils eine durch die Mantelfläche des Tragteiles (91) in die rohrförmigen Gehäuse einmündende Einfuhröffnung (94) für ein Verschlußteil (22) aufweist.

7. Dosiervorrichtung nach einem der Ansprüche 5 oder 6, **dadurch gekennzeichnet, daß** innerhalb des Tragteiles (91) der Absperreinheit (9) im Bereich zwischen zwei benachbarten Absperrorganen (2) jeweils ein Freiraum (92) ausgebildet ist und das Tragteil (91) im Bereich seines Außenumfangs jeweils eine durch die Mantelfläche des Tragteiles (91) in den Freiraum (92) einmündende Einführöffnung (96) aufweist, in die ein Schneckendosierer (7) einführbar und mit dem Tragteil (91) verbindbar ist.

8. Dosiervorrichtung nach einem der Ansprüche 5 bis 7, **dadurch gekennzeichnet, daß** die Absperreinheit (9) einen modularen Aufbau aufweist, dergestalt, daß Verschlußteile (22) mit zugehörigem Antrieb bedarfsweise in die im Tragteil (91) angeordneten Gehäuse (21) zur Ausbildung von Absperrorganen (2) einführbar sind und das Tragteil (91) bedarfsweise mit Schneckendosierern (7) ausrüstbar ist.

9. Dosiervorrichtung nach einem der Ansprüche 1 bis 8, **dadurch gekennzeichnet, daß** bis zu sechs Absperrorgane (2) für eine entsprechende Anzahl Vorratsbehälter - (1) und bis zu sechs Schneckendosierer (7) vorgesehen sind.

10. Dosiervorrichtung nach einem der Ansprüche 1 bis 9, **dadurch gekennzeichnet, daß** im Bereich der Auslaßöffnung (31) des Wiegegefäßes (3) ein mit einer drehbaren Schnecke (43) ausgerüsteter Mischer (4) zur Durchmischung des aus dem Wiegegefäß (3) ausgelassenen Schüttgutes vorgesehen ist und der Mischer (4) unter einem Winkel α von 10 bis 60 ° in Bezug auf die Horizontale geneigt angeordnet ist.

## Claims

1. Dosing apparatus including at least one hopper (1) with outlet opening (11) for fluid bulk materials and a weighing container (3), which is disposed beneath the at least one hopper (1) and receives the emerging bulk materials, said weighing container induding a weighing cell (32) for weighing the bulk materials, the outlet opening (11) being openable or closable in the at least one hopper (1) by means of a shut-off member (2), **characterised in that** the shut-off member (2), which is associated with each hopper, includes a tubular housing (21) and an opening (20) for the bulk material, said opening (20) extending transversely relative to the longitudinal axis LA of the housing (21) through the lateral surface of the housing (21) with two openings (20a, 20b), and the outlet opening (11) of the hopper (1) communicates with the opening (20) and internally of the tubular housing (21) a closure part (22), with a cross-section corresponding to the cross-section of the tubular housing (21), is guided in a displaceable manner along the longitudinal axis LA and the closure part (22) opens or closes the opening (20) for the bulk material in dependence on the respective displacement position internally of the tubular housing.

2. Dosing apparatus according to claim 1, **characterised in that** the closure part (22) is piston-shaped and is guided in a sealing manner internally of the tubular housing (21) of the shut-off member (2).

3. Dosing apparatus according to one of claims 1 or 2, charactensed in that the shut-off members (2) are disposed in a plane (E) and are combined together to form one shut-off unit (9), which is disposed between the hoppers (1) and the weighing container (3).

4. Dosing apparatus according to claim 3, **characterised in that** as shut-off unit a support part (91), which crosses the direction of fall (F) of the bulk material components out of the hoppers (1), is provided with openings (20) for the vertical fall of the loose material components out of the hoppers (1) into the weighing container (3) and the openings (20) communicate with cylindrical hollow spaces, which extend transversely rotative thereto and form the tubular housings (21) of the shut-off members (2), and in which are disposed the displaceable piston-shaped closure parts (22),

5. Dosing apparatus according to one of claims 1 to 4, **characterised in that** the shut-off unit (9) includes a frame-like, more especially ringshaped support part (91) and the shut-off members (2) are disposed internally of the support part (91) so as to extend in a star-shaped manner with their longitudinal axis (LA) along the diameter (D) of the support part (91).

6. Dosing apparatus according to claim 5, **characterised in that** the support part (91) and the tubular housings (21) of the shut-off members (2) are in one piece and the support part (91), in the region of its outer periphery, includes respectively an inlet opening (94) for a closure part (22), which inlet opening (94) terminates into the tubular housing through the lateral surface of the support part (91).

7. Dosing apparatus according to one of claims 5 or 6, **characterised in that** a space is configured respectively internally of the support part (91) of the shut-off unit (9) in the region between two adjacent shut-off members (2) and the support part (91), in the region of its outer periphery, indudes respectively an inlet opening (96) which terminates into the space (92) through the lateral surface of the support part (91), into which inlet opening (96) a screw dosing means (7) is introducible and connectable to the support part (91).

8. Dosing apparatus according to one of claims 5 to 7, **characterised in that** the shut-off unit (9) includes a modular design, in such a manner that, for the configuring of shut-off members (2), closure parts (22) with associated driving means where necessary are introducible into the housings (21), which are disposed in the support part (91), and the support part (91) where necessary is providable with screw dosing means (7).

9. Dosing apparatus according to one of claims 1 to 8, **characterised in that** up to six shut-off members (2) for a corresponding number of hoppers (1) and up to six screw dosing means (7) are provided.

10. Dosing apparatus according to one of claims 1 to 9, **characterised in that** in the region of the outlet opening (31) of the weighing container (3) a mixer (4), which is provided with a rotatable screw (43), is provided for mixing the bulk material discharged from the weighing container (3) and the mixer (4) is inclinedly disposed at an angle α of between 10 and 60° with reference to the horizontal.

## Revendications

1. Dispositif de dosage comportant au moins un réservoir de stockage (1) pourvu d'un orifice d'échappement (11) pour un produit en vrac pouvant s'écouler, ainsi qu'un récipient de pesage (3), disposé en dessous de l'au moins un réservoir de stockage (1) en vue de recevoir le produit en vrac qui s'écoule et pourvu d'une cellule de pesage (32) en vue de peser ledit produit, l'orifice d'échappement (11) de l'au moins un réservoir de stockage (1) pouvant être ouvert ou fermé à l'aide d'un organe d'obturation (2),
**caractérisé en ce que**
l'organe d'obturation (2) associé à chacun des réservoirs de stockage (1) possède un logement tubulaire (21) et une ouverture de passage (20) pour le produit en vrac, orientée transversalement par rapport à l'axe longitudinal LA du logement (21) et traversant, à l'aide de deux percements (20a, 20b), la surface d'enveloppe du logement (21) ; l'orifice d'échappement (11) du réservoir de stockage (1) communique avec l'ouverture de passage (20) et à l'intérieur du logement (21), un élément de fermeture (22), dont la section transversale correspond à celle du logement tubulaire (21), est guidé de manière déplaçable le long de l'axe longitudinal LA ; cet élément de fermeture (22) libère ou ferme l'ouverture de passage (20) pour le produit en vrac, ceci en fonction de sa position de déplacement à l'intérieur du logement tubulaire.

2. Dispositif de dosage selon la revendication 1,
**caractérisé en ce que**
l'élément de fermeture (22) est en forme de piston, et guidé, en assurant l'étanchéité, à l'intérieur du logement tubulaire (21) de l'organe d'obturation (2).

3. Dispositif de dosage selon la revendication 1 ou 2,
**caractérisé en ce que**
les organes d'obturation (2) sont disposés dans un plan (E) et sont rassemblés en une unité d'obturation (9), disposée entre les réservoirs de stockage (1) et le récipient de pesage (3).

4. Dispositif de dosage selon la revendication 3,
**caractérisé en ce que**
comme unité d'obturation (9), on a prévu un élément porteur (91) disposé transversalement par rapport à la direction de chute (F) des composants du produit en vrac s'écoulant à partir des réservoirs de stockage (1), et comportant des ouvertures de passage (20) pour la chute verticale des composants à partir des réservoirs de stockage (1) et en direction du récipient de pesage (3) ; les ouvertures de passage (20) communiquent avec des cavités cylindriques orientées transversalement par rapport à elles, qui forment les logements tubulaires (21) des organes d'obturation (2) et dans lesquelles sont disposés les éléments de fermeture déplaçables en forme de piston (22).

5. Dispositif de dosage selon l'une des revendications 1 à 4
**caractérisé en ce que**
l'unité d'obturation (9) possède un élément porteur (91) en forme de cadre, et plus spécialement en forme d'anneau ; les organes d'obturation (2) sont disposés à l'intérieur de l'élément porteur (91), en forme d'étoile, leur axe longitudinal (LA) étant orienté le long des diamètres (D) de l'élément porteur (91).

6. Dispositif de dosage selon la revendication 5,
**caractérisé en ce que**
l'élément porteur (91) et les logements tubulaires (21) des organes d'obturation (2) sont formés d'une seule pièce ; l'élément porteur (91) présente à chaque fois, au voisinage de son périmètre extérieur, une ouverture d'insertion (94), passant à travers la surface d'enveloppe de l'élément porteur (91) et débouchant à l'intérieur du logement tubulaire, pour un élément de fermeture (22).

7. Dispositif de dosage selon l'une des revendications 5 ou 6,
**caractérisé en ce que**
à l'intérieur de l'élément porteur (91) de l'unité d'obturation (9), dans la zone comprise entre deux organes d'obturation voisins (2), est constituée à chaque fois une zone de dégagement (92) et l'élément porteur (91) possède, au voisinage de son périmètre extérieur, à chaque fois une ouverture d'insertion (96) passant à travers la surface d'enveloppe dudit élément (91) et débouchant dans la zone de dégagement (92) ; un doseur à vis sans fin (7) peut être inséré dans cette ouverture et relié à l'élément porteur (91).

8. Dispositif de dosage selon l'une des revendications 5 à 7,
**caractérisé en ce que**
l'unité d'obturation (9) présente une structure modulaire de telle manière que des éléments de fermeture (22) peuvent être insérés au besoin, avec la commande correspondante, dans les logements (21) disposés dans l'élément porteur (91) en vue de former des organes d'obturation (2) ; l'élément porteur (91) peut au besoin être équipé de doseurs à vis sans fin (7).

9. Dispositif de dosage selon l'une des revendications 1 et 8,
**caractérisé en ce que**
jusqu'à six organes d'obturation (2) sont prévus pour un nombre correspondant de réservoirs de stockage (1) et jusqu'à six doseurs à vis sans fin 7 sont également prévus.

10. Dispositif de dosage selon l'une des revendications 1 et 9
**caractérisé en ce que**
au voisinage de l'orifice d'échappement (31) du récipient de pesage (3), on a prévu un mélangeur (4), équipé d'une vis sans fin rotative (43) et servant au brassage du produit en vrac échappé du récipient de pesage (3) ; ledit mélangeur (4) est disposé sous un angle d'inclinaison α de 10 à 60° par rapport à l'horizontale.
